# EUROPEAN PATENT APPLICATION

(11) **EP 4 657 584 A1**
(43) Date of publication of application: **03.12.2025**
(21) Application number: 24206966.4
(22) Date of filing: 16.10.2024
(51) Int. Cl.: H01M 10/0525, H01M 10/0567

(54) **ELECTROLYTE AND LITHIUM-ION BATTERY APPLYING THE SAME**

(30) Priority: 28.05.2024 CN 202410675302
(71) Applicant: Eve Energy Co. Ltd., Huizhou, Guangdong 516000 (CN)
(72) Inventor: Huang, Jiayuan, Huizhou,Guangdong, 516000 (CN); Zhao, Ruirui, Huizhou,Guangdong, 516000 (CN); Ji, Yajuan, Huizhou,Guangdong, 516000 (CN); Xie, Yingpeng, Huizhou,Guangdong, 516000 (CN)
(74) Representative: Michalski Hüttermann & Partner Patentanwälte mbB

(57) **Abstract**

Provided is an electrolyte and a lithium-ion battery appying the same. The electrolyte includes a first additive, in which a mass fraction of the first additive in the electrolyte is 2.5-5.5%, the first additive contains trimethyl phosphate (TMP) and ethoxy(pentafluoro)cyclotriphosphazene (PFPN), and a mass ratio of the TMP to the PFPN is (0.5-2):(2-3.5). The electrolyte is added with the first additive containing TMP and PFPN, and both the TMP and PFPN have properties of low combustion heat, which enhances the flame retardant effect of the electrolyte. By applying the electrolyte in a lithium-ion battery, it not only reduces the risk of the lithium-ion battery becoming flammable and explosive, when suffering thermal runaway, caused by the generation of flammable gases due to the reduction and decomposition of the electrolyte, improving the safety performance of the batteries, but also reduces the gas generation of the battery stored at high temperatures, and improves the battery storage performance at high temperatures.

## Description

### TECHNICAL FIELD

The present disclosure relates to the technical field of lithium-ion batteries and, particularly, to an electrolyte and a lithium-ion battery applying the same.

### BACKGROUND

The continued prosperity of computers, communications and consumer electronics products has brought about the rapid development of the lithium-ion battery industry, especially the rise of energy vehicles in recent years, which not only promotes the development of lithium-ion power batteries, but also raises the requirements for higher energy density and safety performance.

The application of high-nickel ternary materials and silicon-based materials is an effective way for lithium-ion batteries to achieve high energy density. However, the poor safety of the high-Ni/high-Si system and the problem of gas generation from high-temperature storage have become one of the major constraints to the industrialization and large-scale application. The main reason for battery flammability and explosiveness is that the thermal runaway of the cells generates combustible gases, which mainly originate from the reduction and decomposition of organic solvents in the electrolyte. As a result, it is difficult for the high-Ni/high-Si lithium-ion batteries of the prior art to achieve both high energy density and high safety performance. Therefore, there is an urgent demand for the development of an electrolyte that improves the safety performance of lithium-ion batteries.

### SUMMARY

In order to solve the poor safety problem and the gas generation problem at high temperature storage of the high-Ni/high-Si lithium-ion batteries of the prior art, to improve the gas generation problem at high temperature storage of the lithium-ion batteries, and to improve the safety performance of the lithium-ion batteries, provided in the present disclosure are an electrolyte and a lithium-ion battery containing the same.

In accordance with a first aspect, provided is an electrolyte, in which the electrolyte includes a first additive, a mass fraction of the first additive in the electrolyte is 2.5-5.5%, the first additive includes trimethyl phosphate (TMP) and ethoxy(pentafluoro)cyclotriphosphazene (PFPN), and a mass ratio of the TMP to the PFPN is (0.5-2):(2-3.5).

In accordance with a second aspect, provided is a lithium-ion battery including the electrolyte as described above.

### DETAILED DESCRIPTION

The technical features of the technical solutions in the present disclosure are clearly and completely described below in conjunction with the specific implementations. Obviously, the examples described herein are only some of the examples of the present disclosure but not all of them. Based on the embodiments in the present disclosure, all other embodiments obtained by those skilled in the art without creative efforts fall within the scope of protection of the present disclosure.

The provided electrolyte is added with a first additive containing TMP and PFPN, and both the TMP and PFPN have properties of low combustion heat, so that the electrolyte shows excellent flame retardant effect under the synergistic effect of phosphorus in TMP and fluorine in PFPN, which also provides the electrolyte with good thermal and electrochemical stability. By applying the electrolyte in a lithium-ion battery, when thermal runaway occurs in the lithium-ion battery, the first additive releases a large number of free radicals capable of capturing combustion radicals (H-, O₂*, HO-) in the gas phase during the heating process, so as to achieve a flame retardant effect. N₂ and ammonia produced by the combustion process of nitrogen in PFPN form a protective layer, which inhibits the supply of oxygen. By the above means, the introduction of the first additive in the electrolyte not only reduces the risk of the lithium-ion batteries becoming flammable and explosive caused by the generation of flammable gases due to the reduction and decomposition of the electrolyte, but also alleviates the problem of the gas generation in high-temperature storage of the lithium-ion batteries, and improves the storage performance of lithium-ion batteries at high temperature.

In some implementations, the electrolyte further includes a second additive, and a mass fraction of the second additive in the electrolyte is 1.05-1.65%, the second additive contains lithium difluorophosphate (LiPO₂F₂) and tripropargyl phosphate (TPP), and a mass ratio of the lithium difluorophosphate to the tripropargyl phosphate is (1-1.5):(0.05-0.15).

By adding the first additive containing the TMP and PFPN into the electrolyte and applying the electrolyte to the lithium-ion battery, although it alleviates the problem of gas generation in high-temperature storage of lithium-ion batteries and improves the safety performance of lithium-ion batteries, the addition of the first additive leads to a decrease in the electrochemical and cycling performance of lithium-ion batteries.

On the basis of adding the first additive containing the TMP and PFPN into the electrolyte, a second additive containing the LiPO₂F₂ and TPP is further added into the electrolyte. The TPP has a lower HOMO-LUMO energy level, which forms films with priority at the positive and negative poles, so as to inhibit the gas generation, improve storage performance at high temperature and safety performance. Additionally, both LiPO₂F₂ and TPP have low impedance, which effectively reduces the impedance as well as the loss of active lithium, increases the capacity of embedded lithium, and improves the performance of the lithium-ion batteries. By the above means, the introduction of the second additive in the electrolyte not only alleviates the problem of gas generation in high-temperature storage of lithium-ion batteries and improves the safety performance of lithium-ion batteries, but also, enhance the electrochemical and cycling performance of lithium-ion batteries to a certain extent, and is conducive to improving the cycling service life of lithium-ion batteries.

In some implementations, the electrolyte further includes an organic solvent, in which a mass fraction of the organic solvent in the electrolyte is 84-88%, and the organic solvent contains at least one of propylene carbonate (PC), ethylene carbonate (EC), dimethyl carbonate (DMC), diethyl carbonate (DEC), ethylene fluorocarbonate (FEC), ethyl methyl carbonate (EMC), and vinylene carbonate (VC).

In some implementations, the organic solvent includes propylene carbonate and dimethyl carbonate, a mass fraction of propylene carbonate in the electrolyte is 5-15%, and a mass fraction of dimethyl carbonate in the electrolyte is 10-20%.

Significantly reducing the content of propylene carbonate and dimethyl carbonate, which are solvents with high combustion heat, in electrolyte and applying them to lithium-ion batteries may further alleviate the problem of gas generation in high-temperature storage of lithium-ion batteries and improve the safety performance of lithium-ion batteries.

In some implementations, the organic solvent further contains ethylene fluorocarbonate, ethyl methyl carbonate, and vinylene carbonate, a mass fraction of ethylene fluorocarbonate in the electrolyte is 8-9%, a mass fraction of ethyl methyl carbonate in the electrolyte is 50-52%, and a mass fraction of vinylene carbonate in the electrolyte is 1-2%.

In some implementations, in terms of a mass fraction, the electrolyte contains following components: 1% of TMP, 3.2% of PFPN, 1.2% of lithium difluorophosphate, 0.10% of tripropargyl phosphate, 10% of propylene carbonate, 15% of dimethyl carbonate, 8.5% of ethylene fluorocarbonate, 50.2% of ethyl methyl carbonate, and 1.5% of vinylene carbonate.

In some implementations, the electrolyte further includes a lithium salt, in which a mass fraction of the lithium salt in the electrolyte is 9-9.5%, and the lithium salt contains at least one of lithium hexafluorophosphate, lithium bis(fluorosulfonyl)imide, lithium bis(trifluoromethanesulfonyl)imide, lithium bis(oxalate)borate, lithium difluoro(oxalato)borate, and lithium tetrafluoroborate.

In some implementations, the lithium salt in the electrolyte is lithium hexafluorophosphate.

It is possible to apply the provided electrolyte to a lithium-ion battery to improve the gas generation problem of the lithium-ion battery for high temperature storage, and also improve the safety performance of the lithium-ion battery.

In some implementations, the lithium-ion battery further includes a positive electrode plate, in which the positive electrode plate includes a positive current collector and a positive active coating provided on at least one surface of the positive current collector, the positive active coating contains a ternary material of LiNiₓCo_{y}M_{1-x-y}O₂, 0.6≤x<1, 0<y<0.4, and M is selected from one of Mn and Al.

In some implementations, the lithium-ion battery further includes a negative electrode plate, in which the negative electrode plate includes a negative current collector and a negative active coating applied on at least one surface of the negative current collector, the negative active coating contains a silicon-based material, and a silicon content in the silicon-based material is 5-30 wt%.

### Examples 1-6 and Contrast Example 1

Provided in Examples 1-6 and Contrast Example 1 is a lithium-ion battery, which is prepared by the following steps:

### 1. Preparation of a positive electrode plate

The ternary material LiNi0.8Co0.1Mn0.1O2, binder polyvinylidene fluoride (PVDF), and conductive agent acetylene black were mixed according to a mass ratio of 97:1.6:1.4, then added to the solvent of N-methylpyrrolidone (NMP), then mixed homogeneously to prepare a positive electrode slurry with a solid content of 45%, then the positive electrode slurry was coated on both surfaces of the positive current collector aluminum foil (with a thickness of 12 µm) to form a positive active coating, and the positive electrode plate was prepared after vacuum drying.

### 2. Preparation of a negative electrode plate

The silicon-based material, the binder sodium carboxymethyl cellulose (CMC) and the conductive agent conductive carbon black (SP) were mixed according to a mass ratio of 96:3:1, then added to the solvent of deionized water, then mixed with the solvent uniformly to prepare a negative electrode slurry with a solid content of 45%, then the negative electrode slurry was coated on both surfaces of the negative current collector copper foil (with a thickness of 6 µm) to form a negative active coating, and the negative electrode plate was prepared after vacuum drying.

### 3. Preparation of a separator

A polyethylene (PE) film containing a ceramic layer (with a thickness of 12 µm) was used as the separator.

### 4. Preparation of an electrolyte

The specific components of the electrolyte were shown in Table 1, and the electrolyte was prepared by the following steps: dissolving lithium salts in an organic solvent to formulate a lithium salt solution, adding additives to the lithium salt solution, and mixing uniformly to prepare the electrolyte.

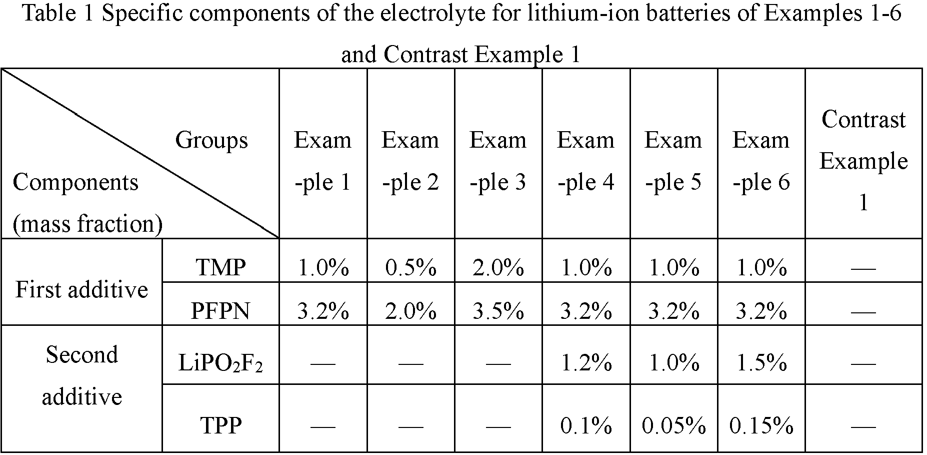

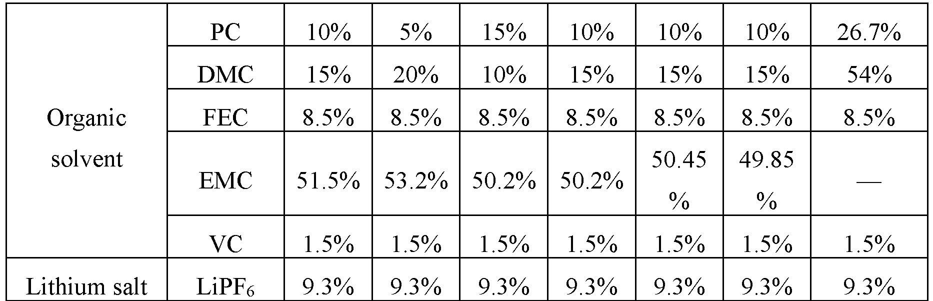

### 5. Assembly and formation of a lithium-ion battery

The aforementioned positive electrode plate, separator, negative electrode plate are stacked in order, so that the separator is between the positive and negative electrodes to play a role in isolation, and then wound to obtain a bare cell. The bare cell is placed in an outer packaging housing, and the electrolyte prepared as described above is injected into the dried cell, which is then subjected to such as vacuum encapsulation, resting, formation, and shaping to obtain a lithium-ion battery.

### Contrast Examples 2-6

Provided in Contrast Examples 2-6 is a lithium-ion battery, and the difference compared to Example 1 is that the components of the electrolyte are different, which is shown in Table 2.

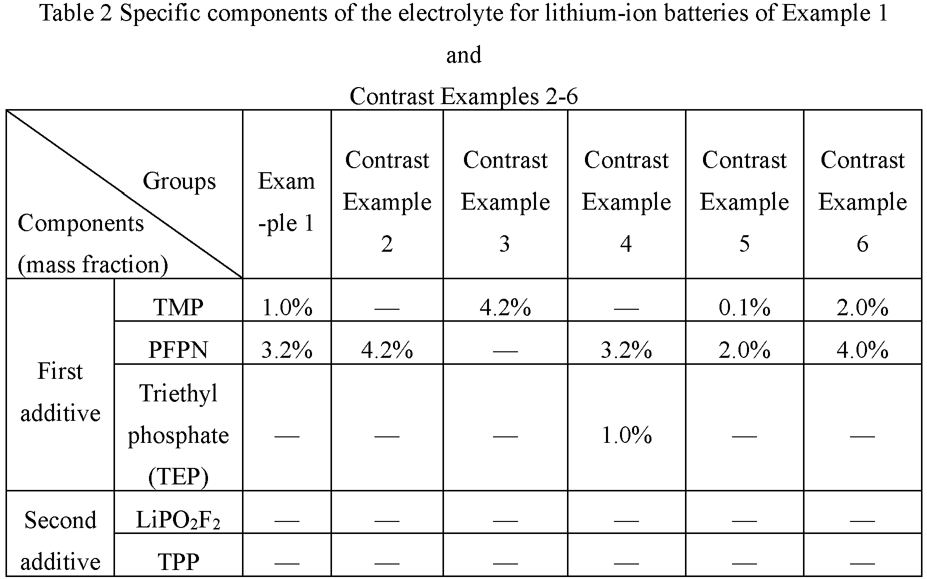

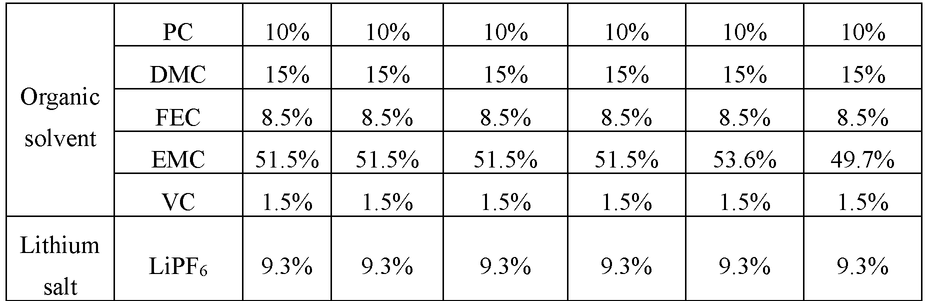

Except for the above differences, the materials, formulation ratios, and preparation operations used for the Contrast Examples 2-6 are strictly consistent with those of Example 1.

### Examples 7-11

Provided in Examples 7-11 is a lithium-ion battery, and the difference compared to Example 4 is that the components of the electrolyte are different, which is shown in Table 3.

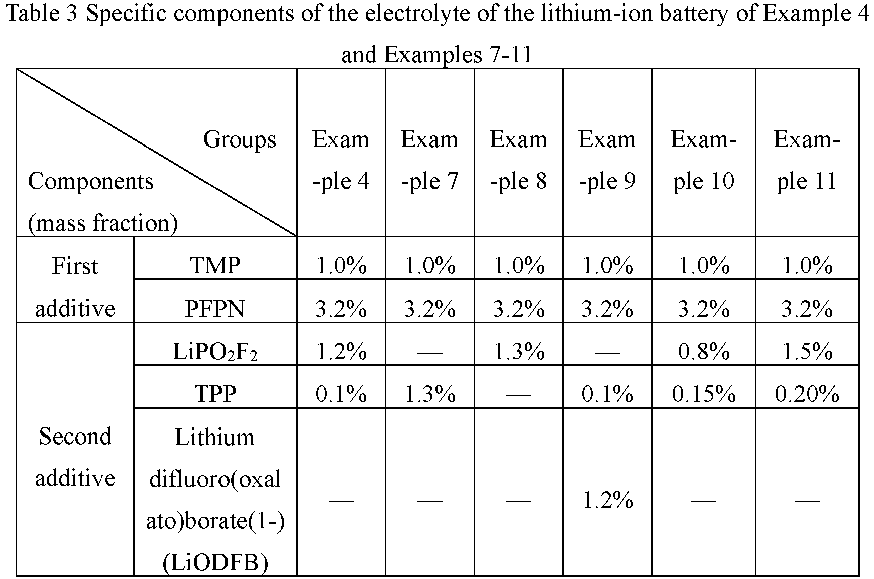

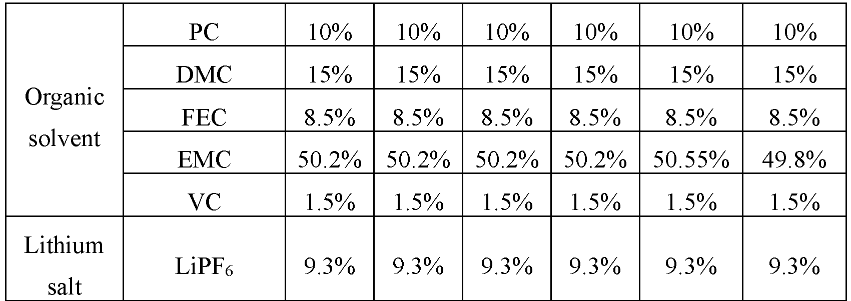

Except for the above differences, the materials, formulation ratios, and preparation operations used for the Examples 7-11 are strictly consistent with those of Example 4.

### Examples 12-15

Provided in Examples 12-15 is a lithium-ion battery, and the difference compared to Example 4 is that the components of the electrolyte are different, which is shown in Table 4.

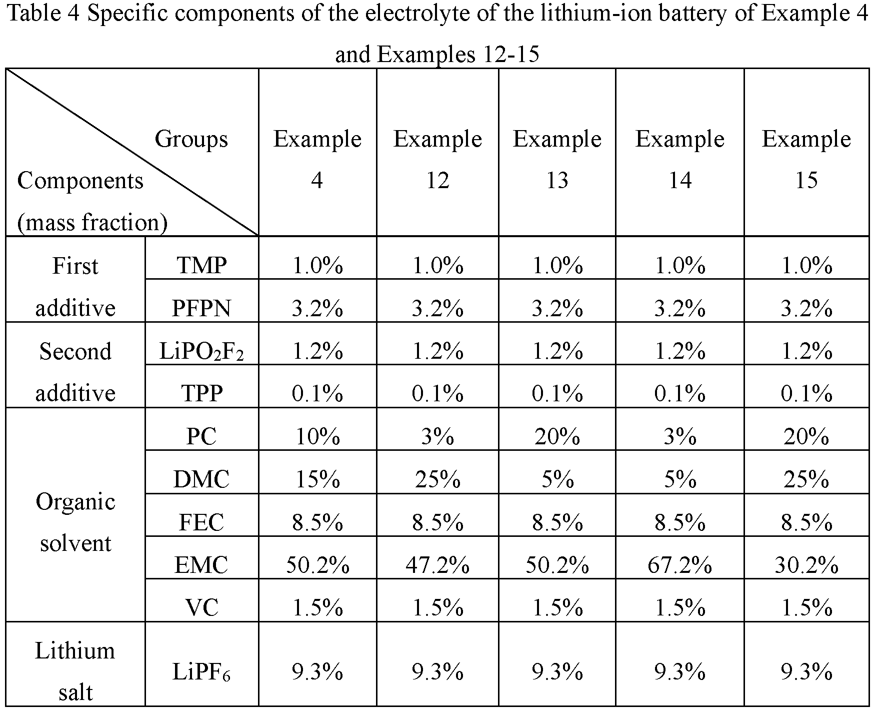

Except for the above differences, the materials, formulation ratios, and preparation operations used for the Examples 12-15 are strictly consistent with those of Example 4.

### Test Example

### 1. Test objects

In the test example, lithium-ion batteries prepared by Examples 1-15 and the Contrast Examples 1-6 were used as test objects to perform the relevant performance tests.

### 2. Test items

### (1) Storage performance test at 60 °C

The lithium-ion batteries after grading were charged to 4.2 V at 0.5 C and charged with constant voltage to 0.05 C. After the lithium-ion batteries reached the full-charged state and were set aside for 2 hours at room temperature, the voltage of the lithium-ion batteries was measured, and the volume of the cells of the lithium-ion batteries was measured using Archimedes' principle in the silicon oil, and then the lithium-ion batteries were put into and stored in an oven at 60 °C for 28 days. The components of the stored gases, the gas generation, and gas generation rate, ACR increment, capacity retention rate, and capacity restoration rate of the lithium-ion batteries were measured before and after the storage.

ACR refers to contact resistance. Voltage resistance meter is employed for testing. The ACR increment is calculated as follows: ACR increment = (resistance value of the lithium-ion battery in the fully-charged state after storage - resistance value of the lithium-ion battery in the fully-charged state before storage)/resistance value of the lithium-ion battery in the fully-charged state before storage × 100%.

Capacity retention rate refers to the capacity retention rate of each of the lithium-ion batteries before and after storage, which is calculated as follows: Capacity retention rate = Discharge capacity value of lithium-ion battery discharged to 2.5V (0%SOC) at 0.1C after storage / Nominal discharge capacity value of lithium-ion battery charged and discharged at 0.33C before storage × 100%.

Capacity restoration rate refers to the ratio between the discharge capacity of each of the lithium-ion batteries after storage, after first restoring the capacity of the each of lithium-ion batteries, and the nominal discharge capacity value that was charged and discharged at 0.33C before storage, which is calculated as follows: Capacity restoration rate = Discharge capacity value of lithium-ion battery discharged to 2.5V (0%SOC) at 0.1C after storage and then subjected to 0.1C charge-discharge test / Nominal discharge capacity value of each of lithium-ion batteries charge-discharge at 0.33C before storage × 100%.

### (2) Safety Performance Test

### Nail penetration test

The main principle of the nail penetration test: by penetrating the separator and causing a short circuit at the positive and negative poles, short-circuit points are artificially created inside the lithium-ion battery, thereby simulating the short-circuit occurrence caused by the conductive redundancy inside the lithium-ion battery. The nail penetration test is the most complex of the safety tests because the entire energy of the lithium-ion battery is rapidly released through internal short-circuit points in a short period of time (up to 70% of the energy will be released in one minute), resulting in a rapid rise in temperature in a short period of time, which leads to a chain reaction that results in thermal runaway. Factors affecting the test results of the nail penetration test of lithium-ion batteries mainly include the diameter of the steel pin, the puncturing speed, the capacity of the lithium-ion battery, and the material system (positive and negative electrode materials, separator, and electrolyte).

The nail penetration test was performed on the each of the lithium-ion batteries in the following steps: single lithium-ion cell was fully charged, and penetrated in a direction perpendicular to the lithium-ion cell pole plate by a high-temperature resistant steel pin of Φ 3 mm (the tip of the cone angle being 45-60°, the surface of the pin being smooth, no corrosion, no oxidation layer and oil), at a speed of (25 ± 5) mm/s, , with a penetration position near the geometric center of the punctured surface, the steel pin stays in the lithium-ion cell for 1h, the fire status of lithium-ion cell is observed, and the number of lithium-ion cell on fire is counted and calculated.

### High-temperature resistance test

The lithium-ion batteries were baked in a hot box at 150°C for 30 min, and the fire status of the lithium-ion batteries was observed and the number of lithium-ion batteries on fire was counted and calculated.

### Cycling performance test

The lithium-ion batteries after grading were placed in a temperature-controlled box, charged to 4.2 V at 1.0 C under 25 ± 2 °C, then charged to 0.05 C with constant voltage, set aside for 10 min, then discharged to 3.0 V at 1.0 C to perform room-temperature and high-temperature cycling tests, and then underwent the discharging DC internal resistance (DCR) test before the room-temperature (25 °C) and high-temperature (60 °C) cycling tests and after every 500 cycles of cycling tests.

### 3. Test result

**Table 5 Gas component test results of lithium-ion batteries after 28 days of storage at 60 °C**

| Groups | Volume of gas generated (ml) | Percentage of gas generated | | | | | | Amount of total combustible gas (H₂+CH₄+C₂H₄+ C₂H₆) (ml) |
|---|---|---|---|---|---|---|---|---|
| | | CO₂ | CO | H₂ | CH₄ | C₂H₄ | C₂H₆ | |
| Example 1 | 10.6 | 88.11% | 9.45% | 0.20% | 1.55% | 0.03% | 0.66% | 0.259 |
| Example 2 | 11.2 | 88.25% | 9.31% | 0.19% | 1.57% | 0.03% | 0.65% | 0.273 |
| Example 3 | 12.0 | 88.15% | 9.21% | 0.24% | 1.62% | 0.08% | 0.7% | 0.317 |
| Example 4 | 4.8 | 87.51% | 10.22% | 0.24% | 1.31% | - | 0.71% | 0.108 |
| Example 5 | 5.4 | 89.60% | 7.99% | 0.22% | 1.51% | - | 0.69% | 0.131 |
| Example 6 | 5.2 | 88.05% | 9.23% | 0.26% | 1.64% | 0.1% | 0.72% | 0.141 |
| Example 7 | 9.1 | 880% | 9.26% | 0.29% | 1.66% | 0.09% | 0.7% | 0.249 |
| Example 8 | 9.3 | 88.03% | 9.23% | 0.29% | 1.65% | 0.09% | 0.71% | 0.255 |
| Example 9 | 9.2 | 88.11% | 9.16% | 0.28% | 1.64% | 0.11% | 0.71% | 0.245 |
| Example 10 | 9.0 | 88.85% | 8.21% | 0.25% | 1.63% | 0.1% | 0.78% | 0.239 |
| Example 11 | 9.5 | 87.47% | 9.41% | 0.36% | 1.78% | 0.19% | 0.79% | 0.296 |
| Example 12 | 15.4 | 87.95% | 9.08% | 0.34% | 1.65% | 0.21% | 0.77% | 0.457 |
| Example 13 | 13.7 | 87.95% | 8.99% | 0.38% | 1.77% | 0.20% | 0.71% | 0.419 |
| Example 14 | 12.1 | 88.50% | 8.50% | 0.37% | 1.72% | 0.18% | 0.73% | 0.341 |
| Example 15 | 41.2 | 86.90% | 10.60% | 0.85% | 0.72% | 0.68% | 0.25% | 1.030 |
| Contrast Example 1 | 75.0 | 88.11% | 9.66% | 0.44% | 0.61% | 0.43% | 0.75% | 1.673 |
| Contrast Example 2 | 60.7 | 86.80% | 11.05% | 1.3% | 0.67% | 0.1% | 0.09% | 1.311 |
| Contrast Example 3 | 64.5 | 86.78% | 11.11% | 1.32% | 0.65% | 0.11% | 0.09% | 1.400 |
| Contrast Example 4 | 42.6 | 86.75% | 11.1% | 1.33% | 0.66% | 0.12% | 0.1% | 0.941 |
| Contrast Example 5 | 66.2 | 86.55% | 11.14% | 1.39% | 0.7% | 0.15% | 0.13% | 1.470 |
| Contrast Example 6 | 46.5 | 86.6% | 11.15% | 1.35% | 0.69% | 0.13% | 0.12% | 1.065 |

Gas component test results of lithium-ion batteries after 28 days of storage at 60°C are as shown in Table 5.

Compared to the Contrast Examples 1-6, the electrolyte of the lithium-ion battery provided in Examples 1-15 contains 2.5-5.5 wt% of the first additive. The first additive is made by mixing TMP and PFPN in a mass ratio of (0.5-2):(2-3.5). Test results showed that the lithium-ion batteries provided in Examples 1-15 had a lower amount of gas generation as well as a lower amount of total combustible gases after 28 days of storage at 60°C than those in Contrast Examples 1-6.

Compared to Example 1, the electrolyte of the lithium-ion battery provided in Examples 4-6 further contains 1.05-1.65 wt% of the second additive. The second additive is made by mixing LiPO₂F₂ and TPP in a mass ratio of (1-1.5):(0.05-0.15). Test results showed that the lithium-ion batteries provided in Examples 4-6 had a lower amount of gas generation as well as a lower amount of total combustible gases after 28 days of storage at 60°C than those in Example 1.

**Table 6 Performance test results of lithium-ion batteries after 28 days of storage at 60°C**

| Groups | ACR increment (%) | Capacity Retention Rate (%) | Capacity Restoration Rate (%) |
|---|---|---|---|
| Example 1 | 16.46 | 91.97 | 95.42 |
| Example 2 | 17.16 | 90.07 | 95.42 |
| Example 3 | 16.8 | 90.27 | 95.82 |
| Example 4 | 12.21 | 94.90 | 98.65 |
| Example 5 | 13.21 | 93.47 | 97.97 |
| Example 6 | 13.66 | 93.47 | 97.06 |
| Example 7 | 15.3 | 91.9 | 96.22 |
| Example 8 | 15.45 | 91.7 | 96.02 |
| Example 9 | 14.8 | 91.47 | 96.82 |
| Example 10 | 15.83 | 91.45 | 96.85 |
| Example 11 | 14.89 | 91.26 | 96.62 |
| Example 12 | 18.2 | 89.0 | 94.22 |
| Example 13 | 19 | 88.5 | 93.99 |
| Example 14 | 19.5 | 88.1 | 93.4 |
| Example 15 | 19.6 | 88.0 | 93.2 |
| Contrast Example 1 | 28.29 | 85.11 | 89.86 |
| Contrast Example 2 | 23.26 | 87.11 | 92.86 |
| Contrast Example 3 | 23.16 | 86.2 | 91.89 |
| Contrast Example 4 | 20.74 | 87.22 | 92.9 |
| Contrast Example 5 | 25.23 | 87.51 | 91.88 |
| Contrast Example 6 | 21.18 | 86.12 | 90.76 |

Performance test results of lithium-ion batteries after 28 days of storage at 60°C are as shown in table 6.

Compared to the Contrast Examples 1-6, the electrolyte of the lithium-ion battery provided in Examples 1-15 contains 2.5-5.5 wt% of the first additive. The first additive is made by mixing TMP and PFPN in a mass ratio of (0.5-2):(2-3.5). The test results showed that the lithium-ion batteries provided in Examples 1-15 had a lower ACR increment, a higher capacity retention rate, and a higher capacity restoration rate after 28 days of storage at 60°C than those in Contrast Examples 1-6.

Compared to Example 1, the electrolyte of the lithium ion battery provided in Examples 4-6 further contains 1.05-1.65 wt% of the second additive. The second additive is made by mixing LiPO₂F₂ and TPP in a mass ratio of (1-1.5):(0.05-0.15). Test results showed that the lithium-ion batteries provided in Examples 4-6 had a lower ACR increment, a higher capacity retention rate, and a higher capacity restoration rate after 28 days of storage at 60°C than those in Example 1.

**Table 7 Safety performance test results of lithium-ion batteries**

| Groups | Nail penetration test | Into the hot box at 150°C for 30 min |
|---|---|---|
| Example 1 | 30% on fire | 30% on fire |
| Example 2 | 35% on fire | 30% on fire |
| Example 3 | 30% on fire | 35% on fire |
| Example 4 | 0% on fire | 0% on fire |
| Example 5 | 10% on fire | 10% on fire |
| Example 6 | 5% on fire | 5% on fire |
| Example 7 | 20% on fire | 20% on fire |
| Example 8 | 25% on fire | 25% on fire |
| Example 9 | 20% on fire | 20% on fire |
| Example 10 | 25% on fire | 20% on fire |
| Example 11 | 20% on fire | 20% on fire |
| Example 12 | 35% on fire | 40% on fire |
| Example 13 | 40% on fire | 40% on fire |
| Example 14 | 20% on fire | 25% on fire |
| Example 15 | 70% on fire | 70% on fire |
| Contrast Example 1 | 100% on fire | 100% on fire |
| Contrast Example 2 | 80% on fire | 80% on fire |
| Contrast Example 3 | 85% on fire | 85% on fire |
| Contrast Example 4 | 70% on fire | 70% on fire |
| Contrast Example 5 | 90% on fire | 90% on fire |
| Contrast Example 6 | 75% on fire | 75% on fire |

Performance test results of lithium-ion batteries after 28 days of storage at 60 °C are as shown in table 7.

Compared to the Contrast Examples 1-6, the electrolyte of the lithium-ion battery provided in Examples 1-15 contains 2.5-5.5 wt% of the first additive, the first additive is made by mixing TMP and PFPN according to the mass ratio of (0.5-2):(2-3.5), and the test results showed that all the safety performances of the lithium-ion batteries provided in Examples 1-15 are better than those of the Contrast Examples 1-6.

| Groups | DCR value (mΩ) after cycles at 25°C | | | Capacity Retention Rate (%) after cycles at 25°C | | |
|---|---|---|---|---|---|---|
| | 100 cycles | 500 cycles | 1000 cycles | 100 cycles | 500 cycles | 1000 cycles |
| Example 1 | 19.18 | 20.18 | 20.64 | 96.4 | 93.1 | 90.1 |
| Example 2 | 19.57 | 20.64 | 21.44 | 96.0 | 92.8 | 89.8 |
| Example 3 | 19.88 | 20.98 | 22.34 | 95.4 | 92.1 | 89.1 |
| Example 4 | 16.64 | 17.18 | 18.34 | 99.3 | 96.2 | 93.3 |
| Example 5 | 16.84 | 17.48 | 18.84 | 98.9 | 96.0 | 93.0 |
| Example 6 | 17.24 | 17.68 | 19.04 | 98.5 | 95.8 | 92.8 |
| Example 7 | 18.18 | 18.04 | 19.84 | 98.0 | 95.2 | 92.3 |
| Example 8 | 18.58 | 18.64 | 20.14 | 97.8 | 95.0 | 92.0 |
| Example 9 | 18.98 | 18.94 | 20.64 | 97.3 | 94.8 | 91.8 |
| Example 10 | 19.18 | 19.64 | 21.34 | 97.0 | 94.2 | 91.3 |
| Example 11 | 19.58 | 19.94 | 21.84 | 96.8 | 94.0 | 91.0 |
| Example 12 | 19.98 | 20.64 | 22.64 | 96.0 | 93.7 | 90.3 |
| Example 13 | 19.1 | 19.2 | 20.9 | 96.8 | 94.2 | 91.5 |
| Example 14 | 19.18 | 19.4 | 20.99 | 96.78 | 94.0 | 91.3 |
| Example 15 | 19.12 | 19.3 | 20.84 | 96.98 | 94.1 | 91.4 |
| Contrast Example 1 | 17.97 | 18.58 | 19.73 | 97.6 | 94.7 | 91.0 |
| Contrast Example 2 | 20.57 | 20.66 | 21.03 | 96.4 | 93.4 | 90.8 |
| Contrast Example 3 | 21.07 | 21.08 | 22.73 | 95.8 | 93.0 | 90.2 |
| Contrast Example 4 | 21.37 | 21.78 | 23.13 | 95.3 | 92.7 | 89.5 |
| Contrast Example 5 | 21.97 | 22.18 | 23.63 | 95.0 | 92.1 | 89.0 |
| Contrast Example 6 | 22.55 | 22.88 | 25.13 | 94.4 | 91.1 | 87.5 |

Kinetic and cycling performance test results of lithium-ion battery are as shown in Table 8.

Compared to Contrast Example 1, the lithium-ion batteries provided in Examples 1-3 have significantly lower gas generation as well as significantly lower amounts of total combustible gases after 28 days of storage at 60 °C than those in Contrast Example 1, after the introduction of the first additive containing TMP and PFPN in the electrolyte. However, the lithium-ion batteries provided in Examples 1-3 all have a higher DCR value and a lower cycle capacity retention rate than those of Contrast Example 1. Whereas the lithium-ion batteries provided in Examples 4-6, after the introduction of the second additive into the electrolyte, have a significantly lower gas generation as well as a significantly lower amount of total combustible gases after 28 days of storage at 60 °C than those of Contrast Example 1. The DCR values thereof are all lower than that of the Contrast Example 1, and the cycle capacity retention rates thereof are all higher than that of the Contrast Example 1. The reasons for the above results are: by adding the first additive containing the TMP and PFPN into the electrolyte and applying the electrolyte to the lithium-ion battery, although it alleviates the problem of gas generation in high-temperature storage of lithium-ion batteries and improves the safety performance of lithium-ion batteries, the addition of the first additive leads to a decrease in the electrochemical and cycling performance of lithium-ion batteries. On the basis of adding the first additive containing the TMP and PFPN into the electrolyte, a second additive containing the LiPO₂F₂ and TPP is further added into the electrolyte. The TPP has a lower HOMO-LUMO energy level, which forms films with priority at the positive and negative poles, so as to inhibit the gas generation, improve storage performance at high temperature and safety performance. Additionally, both LiPO₂F₂ and TPP have low impedance, which effectively reduces the impedance as well as the loss of active lithium, increases the capacity of embedded lithium, and improves the performance of the lithium-ion batteries. By the above means, the introduction of the second additive in the electrolyte not only alleviates the problem of gas generation in high-temperature storage of lithium-ion batteries and improves the safety performance of lithium-ion batteries, but also, to a certain extent, enhance the electrochemical and cycling performance of lithium-ion batteries, and is conducive to improving the cycling service life of lithium-ion batteries.

The above examples are only used to illustrate the technical solution of the present disclosure rather than to limit the protection scope of the present disclosure. Although the present disclosure has been described in detail with reference to the above examples, a person of ordinary skill in the art should be aware that modifications or equivalent substitutions may be carried out to the technical solution of the present disclosure, these modifications or substitutions fall within the protection scope of the present disclosure.

## Claims

1. An electrolyte, comprising a first additive, wherein a mass fraction of the first additive in the electrolyte is 2.5-5.5%, the first additive comprises trimethyl phosphate, TMP, and ethoxy(pentafluoro)cyclotriphosphazene, PFPN, and a mass ratio of the TMP to the PFPN is (0.5-2):(2-3.5).

2. The electrolyte according to claim 1, further comprising a second additive, wherein a mass fraction of the second additive in the electrolyte is 1.05-1.65%,
the second additive comprises lithium difluorophosphate and tripropargyl phosphate,
and a mass ratio of the lithium difluorophosphate to the tripropargyl phosphate is (1-1.5):(0.05-0.15).

3. The electrolyte according to claim 2, further comprising an organic solvent, wherein a mass fraction of the organic solvent in the electrolyte is 84-88%, and
the organic solvent comprises at least one of propylene carbonate, ethylene carbonate, dimethyl carbonate, diethyl carbonate, ethylene fluorocarbonate, ethyl methyl carbonate, and vinylene carbonate.

4. The electrolyte according to claim 3, wherein the organic solvent comprises propylene carbonate and dimethyl carbonate,
a mass fraction of propylene carbonate in the electrolyte is 5-15%, and
a mass fraction of dimethyl carbonate in the electrolyte is 10-20%.

5. The electrolyte according to claim 4, wherein the organic solvent further comprises ethylene fluorocarbonate, ethyl methyl carbonate, and vinylene carbonate,
a mass fraction of ethylene fluorocarbonate in the electrolyte is 8-9%,
a mass fraction of ethyl methyl carbonate in the electrolyte is 50-52%, and
a mass fraction of vinylene carbonate in the electrolyte is 1-2%.

6. The electrolyte according to claim 5, wherein, in terms of a mass fraction, the electrolyte contains following components: 1% of TMP, 3.2% of PFPN, 1.2% of lithium difluorophosphate, 0.10% of tripropargyl phosphate, 10% of propylene carbonate, 15% of dimethyl carbonate, 8.5% of ethylene fluorocarbonate, 50.2% of ethyl methyl carbonate, and 1.5% of vinylene carbonate.

7. The electrolyte according to claim 1, further comprising a lithium salt, wherein a mass fraction of the lithium salt in the electrolyte is 9-9.5%, and
the lithium salt comprises at least one of lithium hexafluorophosphate, lithium bis(fluorosulfonyl)imide, lithium bis(trifluoromethanesulfonyl)imide, lithium bis(oxalate)borate, lithium difluoro(oxalato)borate, and lithium tetrafluoroborate.

8. A lithium-ion battery, comprising an electrolyte as claimed in any one of claims 1-7.

9. The lithium-ion battery according to claim 8, further comprising a positive electrode plate, wherein the positive electrode plate comprises a positive current collector and a positive active coating applied on at least one surface of the positive current collector, the positive active coating comprises a ternary material of LiNiₓCo_{y}M_{1-x-y}O₂, 0.6≤x<1, 0<y<0.4, and M is selected from one of Mn and Al.

10. The lithium-ion battery according to claim 8, further comprising a negative electrode plate, wherein the negative electrode plate comprises a negative current collector and a negative active coating provided on at least one surface of the negative current collector, the negative active coating contains a silicon-based material, and
a silicon content in the silicon-based material is 5-30 wt%.
